**Europäisches Patentamt**

**European Patent Office**

**Office européen des brevets**

(19)

(11) Veröffentlichungsnummer: **0 124 852**
**A2**

(12)

# EUROPÄISCHE PATENTANMELDUNG

(21) Anmeldenummer: **84104861.4**

(22) Anmeldetag: **30.04.84**

(51) Int. Cl.³: **B 01 J 4/00**
**G 01 F 11/08**

(30) Priorität: **09.05.83 DE 3316922**

(43) Veröffentlichungstag der Anmeldung:
**14.11.84 Patentblatt 84/46**

(84) Benannte Vertragsstaaten:
**AT BE CH DE FR GB IT LI LU NL SE**

(71) Anmelder: **Henkel Kommanditgesellschaft auf Aktien
Postfach 1100 Henkelstrasse 67
D-4000 Düsseldorf-Holthausen(DE)**

(72) Erfinder: **Vierkötter, Peter
Sperberweg 7
D-5090 Leverkusen(DE)**

(72) Erfinder: **Künzel, Werner
Eichenfeldstrasse 65
D-4018 Langenfeld(DE)**

(72) Erfinder: **vom Hofe, Dieter
Uedesheimerweg 2
D-5000 Köln 71(DE)**

(54) **Vorrichtung zum Abgeben von in vorgegebenem Verhältnis zu mischenden Stoffen.**

(57) Um eine Vorrichtung zum Abgeben von in vor-gegebenem Verhältnis zu mischenden Stoffen mit Hilfe eines Kolben-Zylinder-Systems wirtschaftlich fertigen zu können und als Spender bzw. Verpackung optimal im Hinblick auf Füllmöglichkeit, Dichtheit, Entnahmemöglichkeit und Mischung auszubilden, werden in die Zylinder (4, 5) flexible, nur zu den Austrittsöffnungen (18, 19) des Spenders (1) hin zu öffnende Faltenbalg-Produktbehälter (14, 15) eingesetzt.

Fig 1

EP 0 124 852 A2

Patentanmeldung
Henkelstr. 67
4000 Düsseldorf, den 5. 5. 1983

**0124852**

HENKEL KGaA
ZR-FE/Patente

Bor/C

P a t e n t a n m e l d u n g
D 6832 EP

"Vorrichtung zum Abgeben von in vorgegebenem Verhältnis
 zu mischenden Stoffen"

Die Erfindung betrifft eine Vorrichtung zum Abgeben von
mindestens zwei in vorgegebenem Verhältnis zu mischenden
Stoffen mit Hilfe eines Kolben-Zylinder-Systems mit einer
der Zahl der zu mischenden Stoffe entsprechenden Zahl von
nebeneinanderliegenden, je einen Ausstoßkolben enthaltenden Zylindern mit getrennten Austrittsöffnungen, wobei
den Ausstoßkolben aller Zylinder ein für den Kolbenvorschub zentral zu betätigendes Antriebssystem zugeordnet
ist.

Eine solche Vorrichtung wird in der DE-OS 30 31 192.3
beschrieben. In der bekannten Vorrichtung sind die Querschnitte der Produkt-Austrittsöffnungen der Zylinder
ebenso groß wie die Querschnitte der sich anschließenden
Zylinder selbst. Die fertig konfektionierte Vorrichtung
kann daher über die Austrittsöffnungen gefüllt bzw. nachgefüllt werden. Da ferner ein auf alle Kolben gleichzeitig wirkendes Antriebssystem vorgesehen ist, ergibt sich
in Verbindung mit der Wahl der Zylinder- und Produktaustrittsquerschnitte eine dem Zylindervolumen proportionale
Abgabe der Stoffkomponenten. Eine Abdichtung des Kolbens
und insbesondere von dessen Antriebsspindel und die Diffusionsdichtheit der Zylinder können jedoch bei einer
Massenproduktion mit vertretbarem Aufwand nicht gewährleistet werden.

Ähnliches gilt für eine aus der DE-AS 10 79 598 bekannte

...

0124852

HENKEL KGaA
ZR-FE/Patente

D 6832 EP                    2

Vorrichtung mit koaxialer Zylinder- bzw. Kammeranordnung. In diesem Gerät werden für das Abgeben pastenförmiger oder flüssiger Produkte fest mit den Kammern verbundene querschnittsverkleinernde Austrittsstutzen vorgesehen. Zu den Kolbensystemen gehört ebenfalls ein auf
alle Ausstoßkolben gleichzeitig wirkendes Antriebsorgan. Ein zusätzlicher Nachteil besteht hierbei darin,
daß das Konfektionieren nur nach dem Auffüllen der Kammern bzw. des Zylinders mit den vorgesehenen Stoffkomponenten möglich ist. Ein Wiederauffüllen der Kammern
ist mit wirtschaftlichen Mitteln nicht auszuführen. Besonders bei kleinen Baugrößen ist aber auch das erstmalige Füllen der koaxialen Kammern mit engen Ringquerschnitten mit erheblichen Schwierigkeiten und unverhältnismäßigem Aufwand verbunden.

Der Erfindung liegt die Aufgabe zugrunde, ein Gerät eingangs genannter Art zu schaffen, das wirtschaftlich zu
fertigen ist und das als Spender sowie Verpackung die
Anforderungen an die Füllmöglichkeit, Dichtheit, Entnahmepraxis und Mischmöglichkeit erfüllt. Die erfindungsgemäße Lösung ist gekennzeichnet durch in die Zylinder
einzusetzende, flexible, nur zu den Austrittsöffnungen
hin zu öffnende bzw. offene Produktbehälter. Vorzugsweise
sollen die Produktbehälter faltenbalgartig ausgebildet
werden.

Durch den erfindungsgemäßen Einsatz flexibler Produktbehälter in die Zylinder wird erreicht, daß bei Erhalt
des Vorteils gerader nebeneinanderliegender Kammern bzw.
Zylinder ein Spender geschaffen wird, der auch maximale
Anforderungen an die Diffusionsdichtigkeit erfüllen kann
und dabei problemlos in der Massenproduktion herzustellen, zu befüllen und selbst wiederzubefüllen ist. Als

...

D 6832 *EP*                    3

Werkstoff für die in die Zylinder einzusetzenden Produktbehälter werden vorzugsweise Kunststoffe verwendet, z.B. Polypropylen, Polyäthylen oder koextrudiertes Polyamid/Polypropylen oder Polyester. Solche Werkstoffe besitzen ausgezeichnete gasdiffusionsdichtende Sperreigenschaften.

D 6832 *EP*                    4

Anhand der schematischen Darstellung eines Ausführungsbeispiels werden weitere Einzelheiten der Erfindung erläutert. Es zeigen:

Fig. 1  einen Zwei-Komponentenspender im Längsschnitt;
Fig. 2  den Spender von Fig. 1 in der Seitenansicht;
Fig. 3  den Spender von Fig. 1 in der Draufsicht; und
Fig. 4  den Spender von Fig. 1 im Längsschnitt bei zum
        Teil ausgepreßten Zylindern.

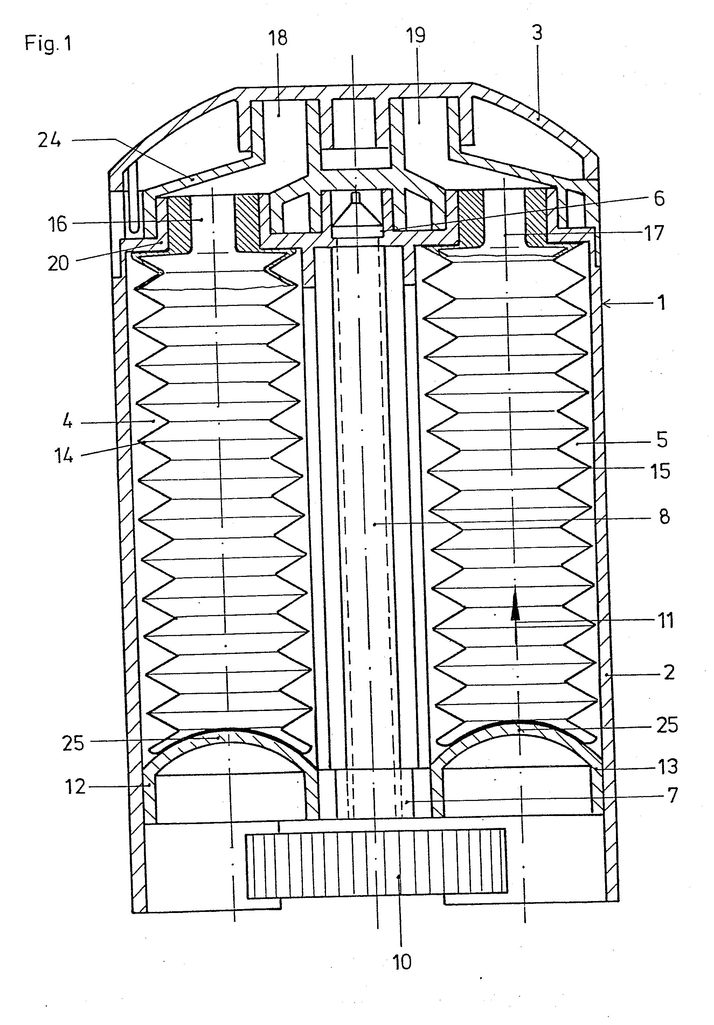

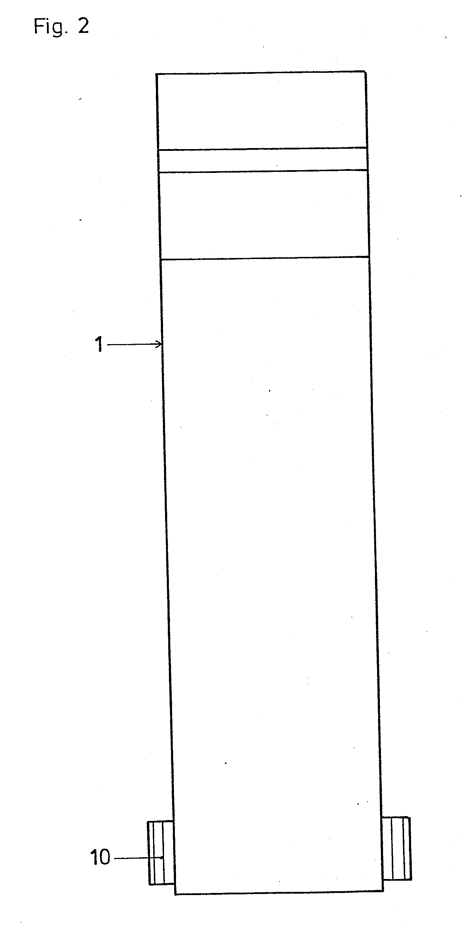

Der insgesamt mit 1 bezeichnete Zwei-Komponentenspender
nach Fig. 1 bis 4 besteht im wesentlichen aus einem Aussengehäuse 2 mit abzunehmender Kappe 3, zwei parallel
verlaufenden, langgestreckten Kammern bzw. Zylindern 4
und 5, einer zwischen den Zylindern 4 und 5 in Lagern 6
und 7 festgelegten Spindel 8 mit durch eine Ratsche 9
zu sicherndem Riffelrad 10 und mit der Spindel 8 durch
Drehen des Riffelrads 10 in Pfeilrichtung 11 zu verschiebenden Kolben 12 und 13 sowie in die Zylinder 4 und 5
eingesetzten flexiblen Produktbehältern 14 und 15, die
an ihren den Kolben 12, 13 gegenüberliegenden Ausgängen
16 und 17 in Austrittsöffnungen 18 und 19 des Geräts 1
münden und im Bereich der Ausgänge 16 und 17 gegen ein
vorzugsweise abnehmbares Widerlager 20 anliegen.

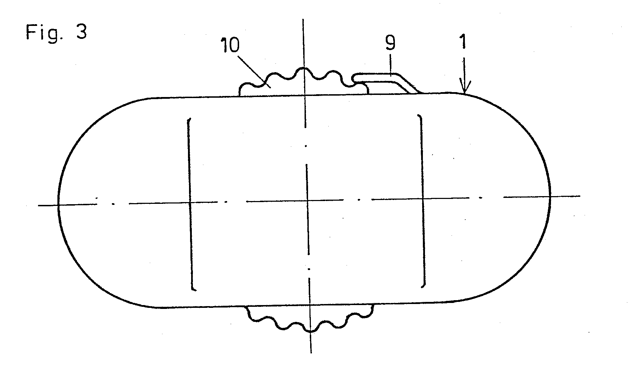

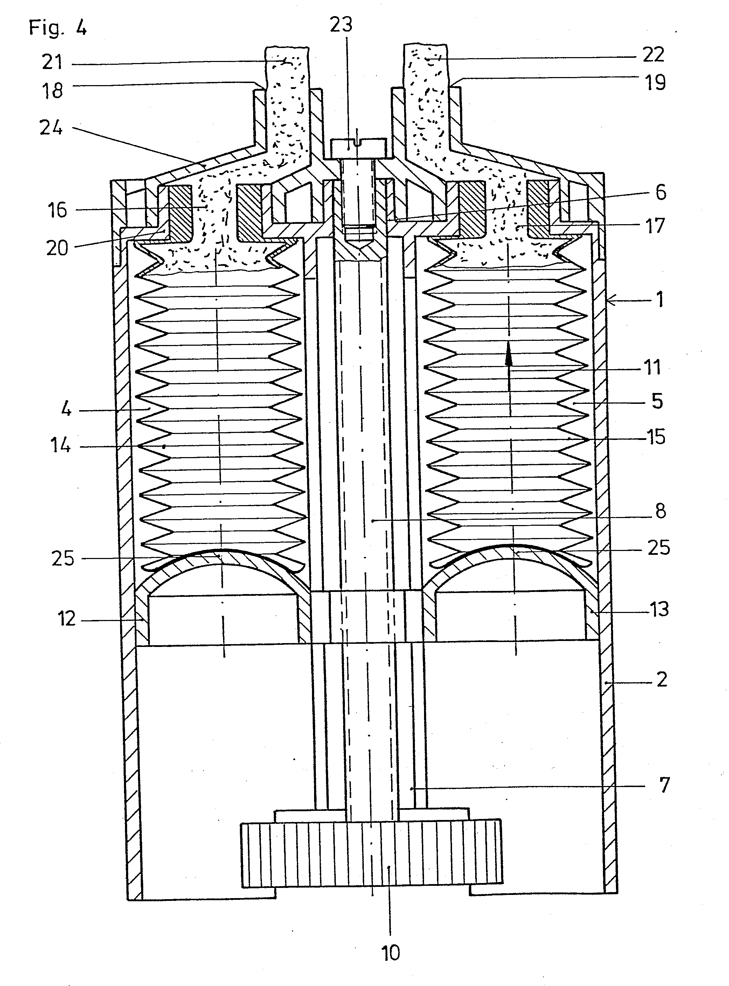

Durch Drehen am Riffelrad 10 wird der aus den Kolben 12
und 13 bestehende Doppelkolben in Pfeilrichtung 11 bewegt, so daß er die flexiblen, vorzugsweise als Faltenbalg ausgebildeten Produktbehälter 14, 15 preßt. In
Fig. 4 wird dieser Zustand bei abgenommener Kappe 3 und
austretenden Produktsträngen 21, 22 dargestellt. Ein Zurückdrehen und damit eine ungleiche Dosierung wird durch
die am Gehäuse angebrachte Ratsche 9 verhindert (Fig. 3).

...

D 6832 EP                 5

Die Spindel 8 kann im Bereich des mündungsseitigen Lagers 6 mit einer Schraube 23 lösbar festgelegt werden. Die Schraube 23 kann gleichzeitig zum Feststellen eines abnehmbaren Deckel- bzw. Kopfteils 24 des Geräts 1 dienen. Wenn ein solches zu lösendes Kopfteil 24 vorgesehen wird, lassen sich die Produktbehälter 14, 15 austauschen, so daß ein nachfüllbarer Spender vorliegt. Alternativ ist es aber auch möglich, die Spindel 8 - wie in Fig. 1 dargestellt - einteilig zu bauen und unveränderbar einrastend in den Lagern 6 und 7 festzulegen.

Vorzugsweise sollen die Kolben 12, 13 auf der den flexiblen Produktbehältern 14, 15 zugewandten Seite konvexe Wölbungen 25 besitzen. Dadurch wird eine gute Restentleerung der Produktbehälter gewährleistet.

Das Volumenverhältnis der zu mischenden Stoffe wird durch Vorgabe der Querschnitte der Produktbehälter 14, 15 und der Querschnitte der Austrittsöffnungen 18, 19 des Spenders bestimmt.

. . .

0124852

HENKEL KGaA
ZR-FE/Patente

Patentanmeldung

D 6832 EP

Bezugszeichenliste

| | | |
|---|---|---|
| 1 | = | Spender |
| 2 | = | Gehäuse |
| 3 | = | Kappe |
| 4, 5 | = | Zylinder |
| 6, 7 | = | Lager |
| 8 | = | Spindel |
| 9 | = | Ratsche |
| 10 | = | Riffelrad |
| 11 | = | Pfeilrichtung |
| 12, 13 | = | Kolben |
| 14, 15 | = | Produktbehälter |
| 16, 17 | = | Ausgang |
| 18, 19 | = | Austrittsöffnung |
| 20 | = | Widerlager |
| 21, 22 | = | Produktstränge |
| 23 | = | Schraube |
| 24 | = | Kopfteil |
| 25 | = | Wölbung |

P a t e n t a n s p r ü c h e

1. Vorrichtung zum Abgeben von mindestens zwei in vorgegebenem Verhältnis zu mischenden Stoffen mit Hilfe eines Kolben-Zylinder-Systems mit einer der Zahl der zu mischenden Stoffe entsprechenden Zahl von nebeneinanderliegenden, je einen Ausstoßkolben (12, 13) enthaltenden Zylindern (4, 5) mit getrennten Austrittsöffnungen (18, 19), wobei den Ausstoßkolben (12, 13) aller Zylinder (4, 5) ein für den Kolbenvorschub zentral zu betätigendes Antriebssystem (6 bis 10) zugeordnet ist, gekennzeichnet durch in die Zylinder (4, 5) einzusetzende, flexible, nur zu den Austrittsöffnungen (18, 19) hin zu öffnende bzw. offene Produktbehälter (14, 15).

2. Vorrichtung nach Anspruch 1, gekennzeichnet durch faltenbalgartige Produktbehälter (14, 15).

3. Vorrichtung nach Anspruch 1 oder 2, dadurch gekennzeichnet, daß die Produktbehälter (14, 15) aus einem Material mit diffusionsdichtenden Sperreigenschaften, insbesondere aus Kunststoff, wie Polypropylen, Polyäthylen, koextrudiertes Polyamid/Polypropylen oder Polyester, bestehen.

4. Vorrichtung nach einem oder mehreren der Ansprüche 1 bis 3, dadurch gekennzeichnet, daß die Ausstoßkolben (12, 13) auf der den Produktbehältern (14, 15) zugewandten Fläche konvex gewölbt (25) sind.

Fig. 1

0124852

Fig. 2

Fig. 3

Fig. 4

0124852

4/4